# EUROPEAN PATENT SPECIFICATION

(11) **EP 1 482 806 B1**
(45) Date of publication and mention of the grant of the patent: **04.10.2006**
(21) Application number: 03705556.3
(22) Date of filing: 20.02.2003
(51) Int. Cl.: A23L 1/226, C11C 3/00, C11C 3/10, A23C 9/12, A23C 23/00, A23C 19/00, A23C 13/16

(54) **TRANSESTERIFICATION REACTION FOR PRODUCTION OF DAIRY FLAVOUR ENHANCING ESTERS**
UMESTERUNGSREAKTION ZUR HERSTELLUNG VON ESTERN, DIE DEN MILCHPRODUKTGESCHMACK FÖRDERN
REACTION DE TRANSESTERIFICATION SERVANT A PREPARER DES ESTERS EXHAUSTEURS D'AROME LAITIER

(30) Priority: 21.02.2002 NZ 51735802
(43) Date of publication of application: 08.12.2004
(73) Proprietor: Fonterra Co-Operative Group Limited, Auckland (NZ)
(72) Inventor: HOLLAND, Ross,, PALMERSTON NORTH (NZ); CROW, Vaughan, Leslie,, PALMERSTON NORTH (NZ); LIU, Shao, Quan,, PALMERSTON NORTH (NZ)
(74) Representative: Brown, John D.
(86) International application number: PCT/NZ2003/000029
(87) International publication number: WO 2003/070010

(56) References cited:
- FR-A- 2 204 360
- JP-A- 6 220 484
- US-A- 4 708 876
- PATENT ABSTRACTS OF JAPAN vol. 011, no. 307 (C-450), 7 October 1987 (1987-10-07) & JP 62 096039 A (SANKYO SHOKUHIN KOGYO KK), 2 May 1987 (1987-05-02)
- CAPONIO F, ALLOGIO V, PALLAVICINI C.: "Modification of goat milk fat triglycerides by immobilized lipase" FETT / LIPID, vol. 100, no. 3, 1998, pages 74-78, XP002325480
- VERHAEGHE D ET AL: "CONTROLLED LIPOLYSIS OF MILK FAT WITH RHIZOPUS ARRHIZUS LIPASE" MILCHWISSENSCHAFT, VV GMBH VOLKSWIRTSCHAFTLICHER VERLAG. MUNCHEN, DE, vol. 45, no. 5, January 1990 (1990-01), pages 275-278,280, XP000135606 ISSN: 0026-3788
- PATENT ABSTRACTS OF JAPAN vol. 1995, no. 03, 28 April 1995 (1995-04-28) & JP 06 345617 A (NIPPON SAAFUAKUTANTO KOGYO KK), 20 December 1994 (1994-12-20)
- PANDEY A. ET AL.: 'The realm of microbial lipases in biotechnology' BIOTECHNOL. APPL. BIOCHEM. vol. 29, no. 2, April 1999, pages 119 - 131, XP002180936
- CAPONIO F. ET AL.: 'An effort to improve the organoleptic properties of a soft cheese from rustic goat milk' EUR. FOOD RES. TECHNOL. vol. 211, 2000, pages 305 - 309, XP002987656
- BALCAO V.M., MALCATA F.X.: 'Lipase catalyzed modification of milkfat' BIOTECHN. ADV. vol. 16, no. 2, 1998, pages 309 - 341, XP004113266
- MARCH J., 1992, JOHN WILEY & SONS, NEW YORK article 'Advanced Organic Chemistry - reactions, mechanisms and structure', pages 397 - 398, XP002097784 Fourth Edition

## Description

### TECHNICAL FIELD

This invention relates to a process for producing of flavour enhancing esters. More particularly in a preferred embodiment it relates to the use of lipases or enzymes from lactic acid bacteria in catalysing a transesterification reaction to convert a mono-, di-, or triglyceride from a dairy source into desired flavour enhancing esters.

### BACKGROUND ART

Various flavour enhancing esters are present in cheeses. Ethyl esters of fatty acids (C2 to ClO) are most abundant. Ethyl butanoate and ethyl hexanoate are primarily responsible for causing fruity flavours in raw milk and cheeses (Bills *et al,* 1965; McGugan *et al,* 1975; Horwood *et al,* 1987; Engels *et al,* 1997; Friedrich and Acree, 1998). Fruity flavours are generally regarded as a defect in Cheddar cheese, but are valued by some consumers (Urbach, 1995; 1997). Fruitiness is characteristic of some Italian-style cheese varieties such as Parmesan and Parmigiano Reggiano in which ethyl esters of C2 to C10 fatty acids are present at significant levels (Dumont *et al,* 1974; Meinhart and Schreier, 1986; Barbieri *et al,* 1994).

Esterification of free fatty acids and alcohols by the action of esterases is generally recognised as the mechanism of ester formation in cheeses, where ethanol is the major alcohol (Bills *et al,* 1965; Morgan, 1976; Fox *et al.,* 2000). Esterases from dairy lactic acid bacteria (LAB) and pseudomonads can esterify ethanol and fatty acids to form esters such as ethyl butanoate and ethyl hexanoate (Hosono and Elliott, 1974; Hosono *et al,* 1974; Liu *et al,* 1998), but the esterifying activities are weak in aqueous media.

Thus it is known that it is possible to control at least one aspect of cheese flavour by the substitution of an alkoxy group from an added alcohol for an alkoxy group of naturally occurring glyceryl esters in cheeses. This reaction was thought to occur in two stages (Bills *et al,* 1965; Morgan, 1976; Fox *et al,* 2000). Firstly, hydrolysis of the naturally occurring glyceryl ester to form a glyceryl alcohol and also a carboxylic acid Then secondly, esterification of the resulting carboxylic acid with an alcohol that has a desired alkoxy group (for example, ethanol). It would be advantageous to control this substitution of alkoxy groups with a single reaction (the transesterification reaction) rather than through a two-reaction process of hydrolysis followed by subsequent esterification (the esterification reaction).

In JP 62-096039 there is described a two stage process for the production of a dairy flavour. The process involves an alcohol fermentation of a sugar such as glucose, with yeast and a hydrolysis of milk fat with a lipase at the same time.

Caponio et al. describe, in "Modification of goat fat triglycerides of immobilised lipase", *Fett*/*Lipid 100* (1998), Nr. 3, 5.74-78, the transesterification of the lipid fraction of goat milk using a commercially available immobilized lipase. This results in a reduction in the amount of short- and medium-chain fatty acids (C₄-C₁₄) and an increase in the long-chain fatty acids (C_{18:1} and C_{18:2}).

In AU 437571 (FR 2 204360) there is described a process for producing a cheese like food. A milk solid is mixed with an oil or fat that has been subjected to an interesterification with a butyric ester of an alcohol to transfer the butyric moiety into the fat or oil. The milk solid and modified fat are then subjected to a cheese making process.

For clarity the two stage reaction is illustrated in equations 1 and 2 below. A transesterification reaction is illustrated in equation 3. 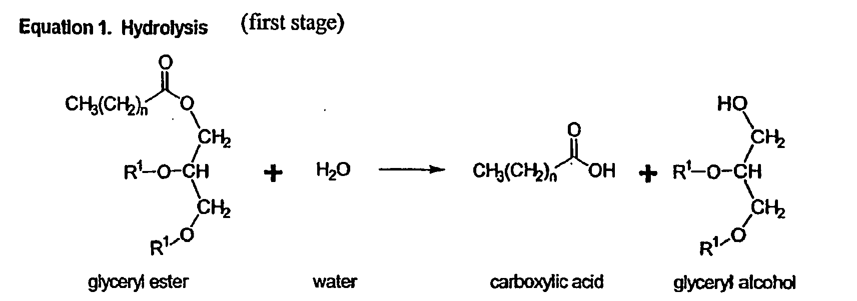 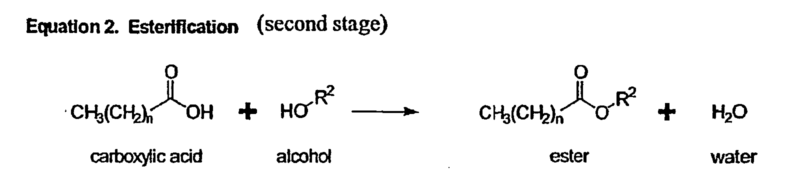 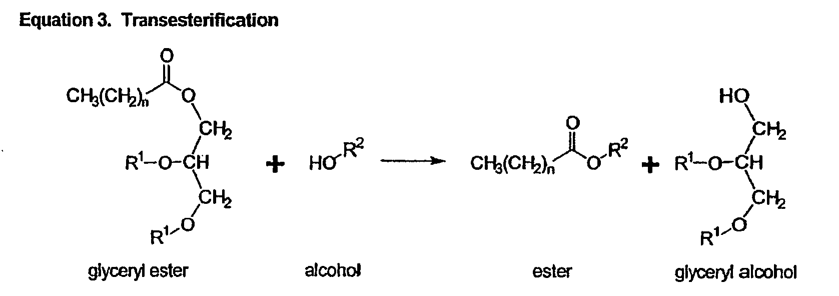 Where:
R¹=H or CH₃ (CH₂)ₙ(C=O)
R₂=(CH₂)ₘH or other alkyl groups
n is an integer greater than, or equal to 2
m is an integer

It is an object of this invention to go some way towards achieving the desideratum of a one step process or at least to offer the public a useful choice.

### DISCLOSURE OF THE INVENTION

Accordingly the invention may be said broadly to consist of a method for producing flavour enhancing esters which comprises:
conducting a transesterification reaction between a mono-, di-, or triglyceride from a dairy source and an alcohol in an aqueous medium in the presence of an esterase exhibiting a transesterification activity to estenfication activity ratio with said mono-, di-, or triglyceride of at least 25:1 to form said flavour enhancing esters.

In another embodiment the invention may be said broadly to consist in a process for producing flavour enhancing esters which comprises:
conducting a transesterification reaction between a mono-, or diglyceride from a dairy source and an alcohol in an aqueous medium in the presence of an enzyme derived from a lactic acid bacteria exhibiting a transesterification activity to esterification activity ratio with said mono- or diglyceride of at least 25:1 to form said flavour enhancing esters.

In a further embodiment the invention may be said broadly to consist in a process for producing flavour enhancing esters which comprises:
conducting a transesterification reaction between a mono-, di-, or triglyceride from a dairy source and an alcohol in an aqueous medium in the presence of a mixture of a lipase and an enzyme derived from a lactic acid bacteria or a mixture of an esterase and one or more enzymes derived from a lactic acid bacteria, said mixture exhibiting a transesterification activity to esterification activity ratio with said mono-, di-, or triglyceride of at least 25:1 to form said flavour enhancing esters.

In one embodiment said esterase is a lipase.

In one embodiment said enzyme is added to said glyceride and alcohol in said aqueous medium.

In another embodiment the lactic acid bacteria from which said enzyme is derived is added to said glyceride and alcohol in said aqueous medium to produce said enzyme therein.

Preferably the glyceride from a dairy source is from whole milk, cream, milk fat, cheese, enzyme modified cheese (EMC), buttermilk, whey, whey cream, fermented milk or other milk product.

The alcohol is selected so that an ester (or esters) having the desired flavour characteristics is produced. In one alternative, said alcohol is ethanol. In another alternative, said alcohol is 2- phenyl ethanol. However, the invention is not confined to these alcohols and may include a range of straight chain, branched chain and aromatic alcohols including (but not restricted to) those that may occur in natural cheeses.

In another alternative, the method defined above includes a fermentation step to produce alcohol.

Preferably alcohol-producing microorganisms mediate the fermentation step.

In one embodiment the alcohol-producing microorganism is *Lactobacillus fermentum.*

A number of other alcohol-producing bacteria can be used, (including heterofermentative *Lactobacilli* and *Leuconostocs*), and also yeasts.

In one alternative the acyl groups of said mono-, di- or triglyceride each have up to 10 carbon atoms and said alcohol is ethanol.

Alternatively, when said glyceride is a diglyceride, the acyl groups thereof have up to 6 carbon atoms and said alcohol is 2-phenylethanol.

In a further alternative when said glyceride is a monoglyceride the acyl groups thereof have up to 8 carbon atoms and said alcohol is 2-phenylethanol.

Preferably said lipase is a 1,3-specific lipase from *Rhizomucor miehei.*

Alternatively, said enzyme is derived from one or more strains of the following genera: of bacterial cultures, including (but not limited to):
*Streptococcus*
*Lactococcus*
*Lactobacillus*
*Leuconostoc*
*Pediococcus*
*Enterococcus*
*Propionibacterium,* and
*Pseudomonas*

In one embodiment said enzyme is derived from the strain *Streptococcus thermophilus* ST1.

Alternatively said enzyme is derived from any one of the strains *Streptococcus thermophilus* NCIMB 700821 (obtained as NCDO 821 and referred to as 821 hereinafter); *Lactobacillus fermentum* B4017; *Lactococcus lactis* subsp. *cremoris* E8 and *Lactococcus lactis* subsp. *lactis* ML3.

In another embodiment the flavour enhancing ester so prepared is added as an ingredient to a food product.

Preferably said food product is a dairy product.

Preferably said dairy product is a cheese or a cheese based product.

The invention may also be said broadly to consist in a flavour enhancing ester prepared by the process defined herein above.

The invention may also be said to consist in a food product containing said flavour enhancing ester.

Preferably said food product is a dairy product.

Preferably said dairy product is a cheese or cheese based product.

### BRIEF DESCRIPTION OF DRAWINGS

Figure 1 is a plot of the synthesis of ethyl butanoate by non-growing cells of *St. thermophilus* ST1 in phosphate buffer containing 100 mM ethanol and 33 mM tributyrin against time. ●, cells only (42 mg cdw); ○, substrates only; ▲, 24 mg cells (cdw); Δ, 48 mg cells (cdw). [(cdw), cell dry weight.]
Figures 2a, 2b and 2c are plots of the synthesis of ethyl esters by non-growing cells of *St. thermophilus* ST1 in phosphate buffer against time. (a) ethyl hexanoate from 100 mM ethanol and 35 mM dihexanoin; (b) ethyl octanoate from 500 mM ethanol and 23 mM monooctanoin; and (c) ethyl decanoate from 500mM ethanol and 10 mM monodecanoin. ●, esters; ○, fatty acids.
Figure 3 is a plot of the synthesis of 2-phenyl ethyl esters by non-growing cells of St *thermophilus* ST1 in phosphate butter against time. ● 2-phenyl ethyl hexanoate from 17 mM 2- phenyl ethanol and 17 mM dihexanoin; ○, 2-phenyl ethyl octanoate from 17 mM 2-phenyl ethanol and 23 mM monooctanoin.
Figure 4 is a plot of the synthesis of ethyl butanoate by 1,3-specific lipase from *Rhizomucor miehei* in a phosphate buffer containing either 50 mM ethanol and 66 mM tributyrin ○ or containing 50 mM each of ethanol and butanoic acid ●.
Figure 5 is a plot of the synthesis of ethyl butanoate by 1,3-specific lipase from *Rhizomucor miehei* in a cheese-based medium containing an excess of ethanol ○. The control ● had no ethanol added.
Figure 6 is a plot of production of ethyl esters of fatty acids against time, using lipase from *Rhizomucor miehei* (0.15%) in cream. ▲, ethyl esters of fatty acids C4 to C8; ●, ethyl esters of fatty acids C10 to C18.
Figure 7 illustrates the concentrations of ethyl esters of free fatty acids of increasing carbon chain length after five hours fermentation as described in example 6.

### MODES OF CARRYING OUT THE INVENTION

The invention may be more fully understood by reference to the following detailed examples.

As used herein the term "flavour" is intended to mean flavour and/or aroma as appropriate in the context.

As used herein the term "glyceride from a dairy source" is intended to mean a composition comprising one or more of triglycerides, diglycerides and monoglycerides present in or generated from milk fat. This is preferably milk fat of bovine origin, but also includes milk fat of ovine (sheep) or caprine (goat) origin. Triglycerides are the predominant lipid class in milk fat, accounting for 97 ― 98% of total milk fat (Christie, 1995). Small amounts of diglycerides and monoglycerides are also present and levels of these components can be elevated by the hydrolytic action of lipases. The glycerides of milk fat are very diverse in their composition. The huge range of different fatty acids esterified in the glyceride molecules confers this diversity. There are 10 major fatty acids ranging in chain length from four carbons to eighteen carbons. However, in total over 400 different fatty acids have been identified in bovine milk fat (Jensen and Clark, 1988).

In calculating the "transesterification activity" a unit of transesterification activity means the amount of enzyme catalysing the synthesis from tributyrin and ethanol of 1 nmol of ethyl butanoate per minute. A standard assay for determining transesterification activity is set out in example 1.

In calculating the "esterification activity" a unit of esterification activity means the amount of enzyme catalysing the synthesis from butanoic acid and ethanol, of 1nmol of ethyl butanoate per 24 h. A standard assay for determining esterification activity is set out in example 2.

### Example 1: Synthesis of esters by Streptococcus thermophilus

### Microorganisms and growth conditions

*Streptococcus thermophilus* ST1 was from the culture collection of the Fonterra Research Centre, Palmerston North, New Zealand. Cultures were grown at 37°C in M17 - glucose broth (Difco, France). Cultures were innoculated with 1% (v/v) of precultures and were incubated statically for up to 36 h.

### Preparation of cell suspensions

Unless stated otherwise, cells in 300 mL (24 h-cultures) were harvested by centrifugation at 7000 g for 10 min at 4°C. Cells were washed in 100 mL (2 x) of 0.1 M potassium phosphate (pH 7.0), followed by centrifugation. The washed cell pellets were resuspended in 60 mL of the same buffer and dispensed in 10 ml aliquots into universal bottles, and stored at -20°C before use.

### Ester synthesis by the transesterification reaction

A standard assay for determining the transesterification activity consisted of a 5.0 mL reaction mixture containing 80 mM potassium phosphate, pH 7.0, 2.0 mL cell suspension, 500 mM ethanol and 10 to 35 mM glyceride. A tributyrin substrate was prepared as described in Holland & Coolbear (1996) and other glyceride substrates were prepared accordingly. The reaction was started by adding 0.5 mL of 5 M ethanol to the above reaction mixture pre-incubated at 30°C for 5 min. A 1.0 mL sample was immediately removed and added to a test tube containing diethyl ether and extracted. The remaining reactants were incubated at 30°C for up to 60 min and samples were taken at intervals and extracted for ester analysis as described below. In some experiments, substrate concentrations were varied according to a particular experiment as indicated. Controls lacking substrates or lacking cells were also included. A unit of enzyme activity (transesterification) was defined as the amount of enzyme catalysing the synthesis from tributyrin and ethanol of 1 nmol of ethyl butanoate per min and specific activity as units per mg protein or cell dry weight (cdw).

### Quantitation of esters by gas chromatography (GC)

One mL of sample taken from a reaction mixture or broth culture was added to a 16 mL Kimax screw-capped test tube containing 2 mL of diethyl ether and 1 mL of internal standard (180 mg/L ethyl acetate in water). Extraction was performed by shaking vigorously for about 2.5 min, followed by centrifugation at 1260 g for 5 min in a centrifuge (Heraeus Megafuge 1.0). The top solvent layer was transferred to a vial containing small amounts of oven-dried anhydrous sodium sulphate and analysed for esters by gas chromatography (GC) as described below.

Following sample extraction, esters were analysed by GC. The analysis was performed using a Shimadzu GC-15A gas chromatograph with a fused silica capillary column (liquid phase, DB-1; length, 30m; i.d., 0.25 mm; film thickness, 1.0 µm) (J&W Scientific, CA, USA). The oven was temperature-programmed at 45°C for 5 min, followed by increasing the temperature to 50°C at 5°C min⁻¹, then to 270°C at 20°C min⁻¹, and held at 270°C for 8 min. A split injection was performed at a ratio of 5:1 and 3 µL of sample were injected. The injector and FID (Flame Ionisation Detector) detector temperatures were 250°C and 275°C, respectively. Other conditions were: carrier gas (He) at 0.9 mL per min⁻¹; H₂ and air at 0.6 kg per cm², respectively; makeup gas (N₂ at 2 kg per cm². The FID output signal was recorded and processed using appropriate software (Shimadzu CLASS-VP^{™} Chromatography Data System Version 4.2 from Shimadzu, MD, USA). Esters in the samples were identified and quantified by comparison with injections of known amounts of pure standards.

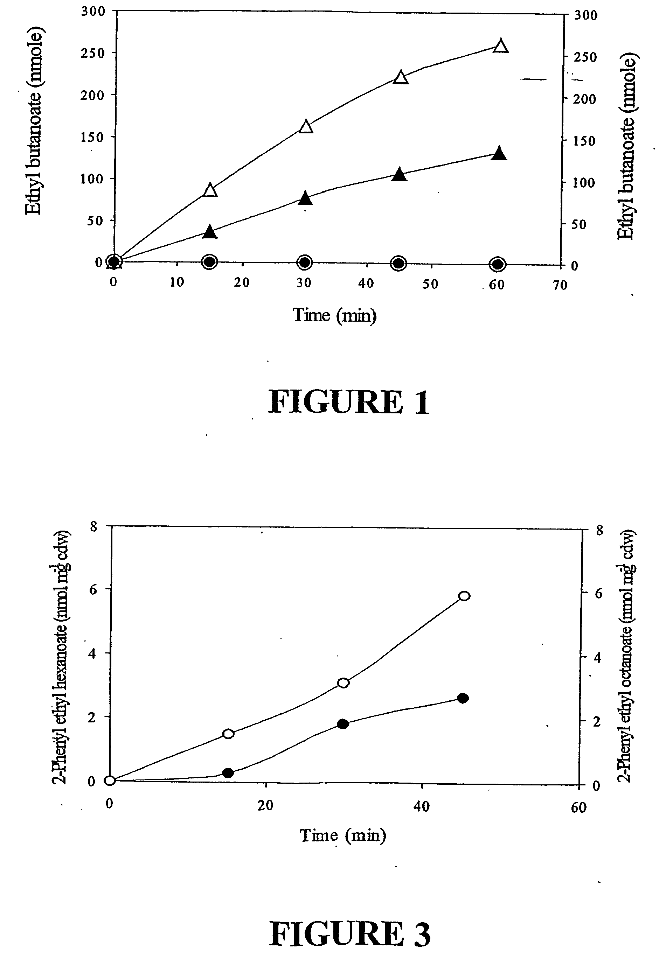

Fig. 1 shows the time-course formation of ethyl butanoate from ethanol and tributyrin by non-growing cells of *St. thermophilus* ST1. The initial rate of synthesis was linear for the first 30 min. The rate of synthesis and the yield increased proportionally as the cell biomass was doubled. Ethyl butanoate was not detectable in the controls (cells only and substrates only). *St. thermophilus* ST1 does not synthesise ethyl butanoate from butanoic acid and ethanol under the conditions shown.

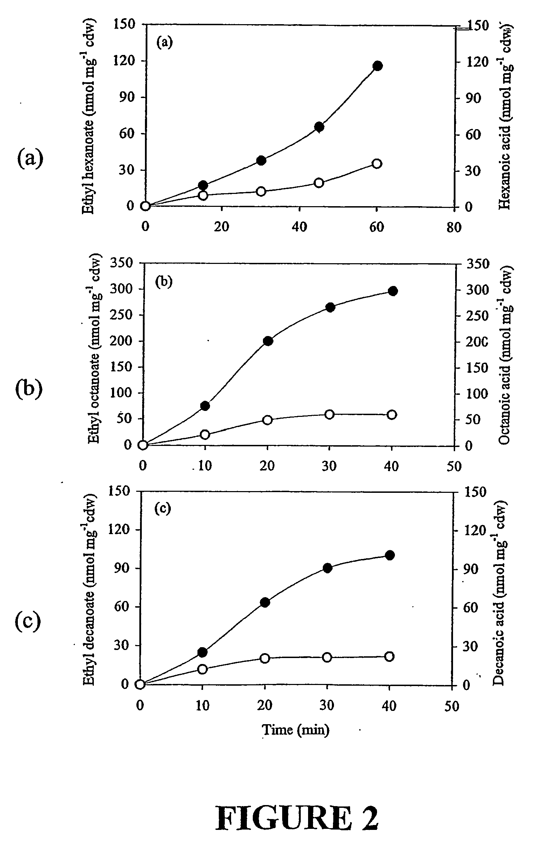

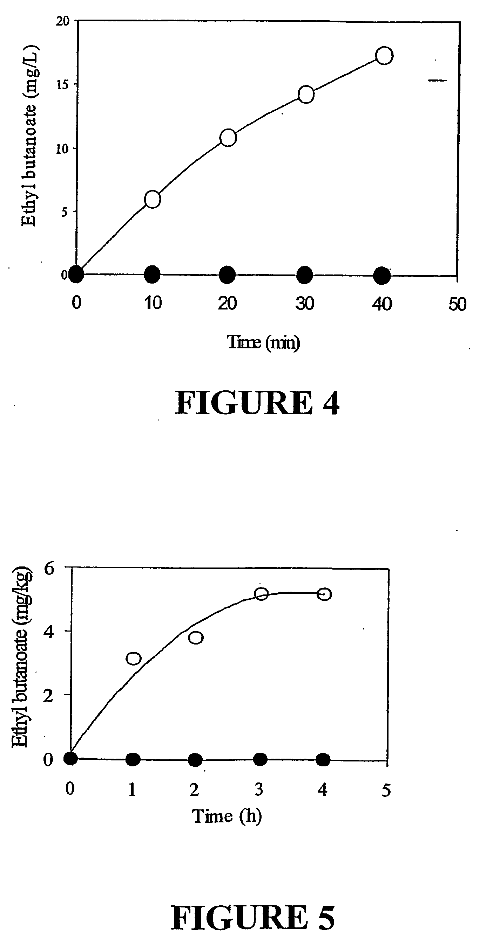

*St. thermophilus* ST1 was not able to synthesise esters from ethanol and triglycerides of C6 to C14, diglycerides of C10 and C14 and monoglyceride of C14 (data not shown). Tributyrin was the only triglyceride that strain ST1 was active towards. Strain ST1 was also able to synthesise ethyl esters from ethanol and diglyceride of C6 (dihexanoin) and monoglycerides of C8 (monooctanoin) and C10 (monodecanoin) (Fig.2a,b,c). The rate of ester synthesis and the yield of esters were much higher than those of fatty acid release (Fig.2a,b,c). In addition, strain ST1 catalysed the synthesis of 2-phenyl ethyl hexanoate and 2-phenyl ethyl octanoate from 2-phenyl ethanol and dihexanoin and monooctanoin, respectively (Fig.3), but was not active towards tributyrin and monodecanoin with 2-phenylethanol as the acyl acceptor (data not shown).

### Example 2: Ester synthesis by lactic acid bacteria grown in broth cultures

### Cultures and growth

Cultures were from the culture collection of Fonterra Research Centre, Palmerston North, New Zealand, and were grown in M17-glucose broth (Difco, France) at 30°C. *Lactobacillus fermentum* B4017 was grown in MRS broth (Merk, Germany) at 30°C. Cultures were grown in 200 mL of appropriate broths supplemented with 50 mM ethanol and 3.3 mM tributyrin (final concentration). Controls contained either no added culture or no added ethanol or tributyrin. Cultures were incubated as stated above for up to 36 h. Samples were taken at intervals between mid-log to late stationary phases and stored at - 20°C before analysis. Samples were used for determinations of cellular dry weights, ethyl butanoate and other esters.

### Transesterification assays

Transesterification activities of growing bacterial cultures were assayed by measuring ethyl butanoate accumulation in an assay system similar to that described in Example 1.

### Esterification assays

Bacterial cells cultured in 400 mL of appropriate broth were harvested by centrifugation at 7000 g for 10 min at 4°C. Cells were washed by resuspending cell pellets in 30 mL (2x) of potassium phosphate buffer (100 mM, pH 5.8), followed by centrifugation at 7000 g for 10 min at 4°C. The washed cells were then resuspended in 10 mL of the same buffer, followed by adding 5 mL each of aqueous solutions of 8 mM ethanol and 8 mM butanoic acid to give a final concentration of 2 mM each of ethanol and butanoic acid, and final concentration of 50 mM potassium phosphate in a total volume of approximately 20 mL cell suspension. The final suspension, containing cells, ethanol and butanoic acid, was incubated statically at 22°C for 24 h and then stored at -20°C for subsequent analysis of ethyl butanoate by gas liquid chromatography (GLC). In calculating the esterification activity, a unit of esterification activity was the amount of enzyme catalysing the formation of 1nmol of ethyl butanoate per 24 h. Specific activities were quantified as units per 100 mg dry weight of cells (dwc).

### Quantitation of esters

Esters were quantified by gas chromatography as described in Example 1.

### Analysis of esters by GC-MS

Esters in broth cultures were analysed by solid phase microextraction (SPME) and gas chromatography-mass spectrometry (GC-MS). SPME was performed as described by Liu *et al* (1998). The gas chromatograph (Shimadzu GC-17A) was equipped with a 30 m x 0.25 mm i.d. fused-silica capillary carbowax column (film thickness 0.25 µm; Alltech, IL, USA) and the injector temperature was 220°C. The carrier gas was helium (column pressure, 54 kPa). The oven temperature was programmed as: 2 min at 50°C, 3°C min⁻¹ to 80°C, 5°C min⁻¹ to 120°C, 20°C min⁻¹ to 220°C and 6 min at 220°C. The GC column was connected directly to the ion source of a Shimadzu QP-5000 mass spectrometer (interface temperature, 230°C). The MS was operating in the scanning mode from 40 to 350 M/Z at 2 scan s⁻¹. Structures were assigned by spectrum interpretation and comparison of the spectra with bibliographic data.

A number of lactic acid bacteria were tested for their ability to synthesise ethyl butanoate from tributyrin and ethanol by growth in broths supplemented with the two substrates. Transesterification activities obtained were then compared with the esterification activities (synthesis of esters by reacting free acids with an alcohol). These activities are set out in Table 1. With both esterification activities and transesterification activities, there were some large species and strain differences. While the diversity of transesterification activities is consistent with the diversity of esterification activities, the former activity is higher than the latter by 34-7500-fold. Strains of *St. thermophilus* produced the highest transesterification activities (by up to 228-fold), compared to other lactic acid bacteria tested. This is consistent with their relatively high esterase activities. Notably, the transesterification activity of *Lb. fermentum* was comparable to that of *St. thermophilus.* The transesterification activities of the two lactococcal strains tested were higher, by up to 18-fold, than the activities of the strains of *Lactobacillus, Leuconostoc,* and *Pediococcus* that were tested.

**Table 1. A Comparison of Ethyl Butanoate Synthesising Activities in Dairy Lactic Acid Bacteria**

| **Strain** | **Enzyme Activities (units mg cdw**^{**-1**}**)**^{**a**} | | |
|---|---|---|---|
| | **Transesterification**^{**b**} | **Esterification (x100)**^{**c**} | **Ratio**^{**d**} |
| *Streptococcus thermophilus* | | | |
| ST1 | 0.837 | 0.215 | 389 |
| 821 | 1.370 | 0.109 | 1257 |
| TS2 | 0.953 | 0.129 | 739 |
| MC | 0.315 | 0.074 | 426 |
| *Lactococcus lactis* subsp. *lactis* | | | |
| ML3 | 0.073 | 0.013 | 562 |
| ML8 | 0.105 | 0.021 | 500 |
| *Lc. Lactis* subsp. *cremoris* | | | |
| E8 | 0.097 | 0.025 | 88 |
| *Lactobacillus rhamnosus* | | | |
| B3081 | 0.013 | 0.033 | 39 |
| B3085 | 0.020 | 0.037 | 54 |
| B3086 | 0.037 | 0.004 | 925 |
| *Lb. paracasei* subsp. *paracasei* | | | |
| B3062 | 0.012 | 0.012 | 100 |
| B3064 | 0.017 | 0.00035 | 4857 |
| B3065 | 0.020 | 0.058 | 34 |
| B3073 | 0.014 | 0.031 | 45 |
| *Lb. fermentum* | | | |
| B4017 | 0.530 | 0.061 | 869 |
| *Lb. plantarum* | | | |
| B3021 | 0.006 | 0.00058 | 1034 |
| B3089 | 0.018 | 0.00024 | 7500 |
| *Leuconostoc lactis* | | | |
| ALFA | 0.016 | 0.008 | 200 |
| *Pediococcus* sp. | | | |
| B4526 | 0.007 | 0.005 | 140 |
| B7023 | 0.007 | 0.002 | 350 |

| | | | |
|---|---|---|---|
| ^{a} Defined as nmol min⁻¹ mg⁻¹; cdw, cell dry weight. ^{b} Defined as the synthesis of ethyl butanoate from tributyrin and ethanol in broth culture. ^{c} Defined as the esterification of butanoic acid and ethanol to form ethyl butanoate; data are extracted from Liu *et al* (1998). ^{d} Ratio of transesterification activity to esterification activity. | | | |

### Example 3: Synthesis of Ethyl Butanoate with lipase from Rhizomucor miehei

### Synthesis of ethyl butanoate in buffer

Ethyl butanoate was synthesised in a 5.0 mL reaction mixture comprising 80 mM potassium phosphate, pH 7.0, 50 mM ethanol and 33 mM tributyrin, unless specified otherwise. The tributyrin substrate was prepared as described elsewhere (Holland & Coolbear, 1996). The reaction was started by adding 0.1 mL of appropriately diluted enzyme preparation (up to 1000-fold dilution) to the above reaction mixture pre-incubated at 30°C for 5 min. A 1.0 mL sample was immediately removed and added to a test tube containing diethyl ether and extracted (see below). The remaining reactants were incubated at 30°C for up to 40 min and samples were taken at intervals and extracted for ethyl butanoate analysis as described below.

### Synthesis of esters in cheese based medium

Ethyl butanoate was also synthesised in a cheese-based medium using 1,3-specific lipase from *Rhizomucor miehei* (sold by Novo Nordisk, Denmark as "Palatase 20000L"). This was carried out in a 9 mL reaction mixture consisting of 4 g young Cheddar cheese slurry and 10 mM ethanol. A slurry was prepared using proteolytic enzymes, emulsifying salts (tri- and disodium citrate) and water. The reaction was initiated with the addition of 40 µL of lipase and the mixture was incubated at 30°C for 4 h. A control containing no added ethanol was also included.

### Extraction and analysis of ethyl butanoate

One mL of sample taken from a reaction mixture was immediately added to a 16-mL Kimax screw-capped test tube containing 2 mL of diethyl ether and 1 mL of internal standard (180 mg/L ethyl acetate in water). Extraction was performed by shaking vigorously for approximately 2.5 min, followed by centrifugation at 1260 x g for 5 min (Heraeus Megaflige 1.0). The top solvent layer was transferred to a GLC vial containing small amounts of oven-dried anhydrous sodium sulphate and analysed for ethyl butanoate by gas liquid chromatography (GLC).

Figure 4 shows that lipase from *Rhizomucor miehei* catalysed the synthesis of ethyl butanoate from ethanol and tributyrin, being linear for the first 10 minutes, but not from ethanol and butanoic acid under the same conditions. Again, there was no formation of ethyl butanoate in the control containing no added lipase.

Figure 5 shows the production of ethyl butanoate by lipase from *Rhizomucor miehei* in a cheese-based medium. There was consistent formation of this ester when ethanol was added to the medium. On the contrary, no ester was detected when either ethanol or lipase from *Rhizomucor miehei* was not added to the medium. In addition to ethyl butanoate, other esters such as ethyl hexanoate were detected, but were not quantifiable in the medium supplemented with ethanol.

### Example 4: Flavour Compounds in Cheese

Fresh milk was separated and recombined to give a protein to fat ratio of 1:0.82. The recombined mix was pasteurised in a continuous system which held the milk at 72°C for 15 seconds. The milk was cooled to 32°C and 375 L placed in each of three temperature-controlled cheese-making vats (vats 3A, 3B and 4).

A culture mix of mesophilic starter strains, 1.8% of vat volume, 100 mL of propionibactena starter adjunct (to produce cheese flavour) and 10 mL of adjunct culture containing *Lactobacillus. rhamnosus* HN001 (as described in WO99/10476) was added to each vat except that in vat 4 the mesophilic starter culture was replaced by a *Streptococcus thermophilus* strain. A further 1875 mL of a culture (LF2) of *Lactobacillus fermentum* was added to vat 4 to produce ethanol in *situ.* Three grams of Hansen Kid lamb lipase powder (80 LFU) was mixed into each vat and then rennet added at a rate of 10 mL per 100 L of milk. The mix was then held for 40 minutes and then the curd was cut with a curd knife with blades spaced at 12 mm intervals.

The temperature was raised to 38°C and the whey drained after a total treatment time of 130 minutes at which time the pH was 6.2. When 30% of the vat volume had been removed, the whey was replaced with 20% of the vat volume of water. When the curd had reached pH 5.2, it was completely drained, allowed to stand for 60 minutes and then milled. Salt (NaCl) was added at a rate of 17g/kg. Two 20 kg blocks, A and B of cheese were produced from each vat. To the curd for block B of vat 3, 118 mL of ethanol mixed with 118 mL of water were added.

The curd was pressed and then the blocks placed in porous bags, to allow CO₂ to escape. The blocks were stored at 20°C for one month and then at 5°C for a further month before being tasted and samples taken for chemical analysis.

The results of the chemical analysis are shown in the table below.

**Table 2: Concentration (Relative Peak Heights) of Volatile Compounds From Cheese with and Without Added Ethanol**

| | **Control - no added ethanol** | **Ethanol addition to cheese** | **Ethanol produced *in situ*** |
|---|---|---|---|
| Ethanol | 6.8 | 154 | 81.9 |
| Ethyl acetate | 0.2 | 1.9 | 0.9 |
| Ethyl butanoate | 1.9 | 16.8 | 13.5 |
| Ethyl hexanoate | 0 | 12.6 | 9.0 |
| Ethyl octanoate | 0 | 0.5 | 0.8 |
| Acetic acid | 63 | 50 | 76.4 |
| Butanoic acid | 197 | 165 | 156 |
| Hexanoic acid | 55 | 49 | 58.5 |
| Octanoic acid | 5 | 4 | 5.1 |

These results demonstrate that when ethanol is added the transesterification reaction leads to production of esters, particularly ethyl butanoate. Ethanol produced in *situ* also leads to production of esters, particularly ethyl butanoate.

### Tasting of Fruity flavour in Cheese

Cheeses manufactured as described above were assessed for flavour attributes by an expert sensory assessment panel. Panellists were asked to taste the cheeses and to record fruity and bitter notes and descriptors of other flavour notes present. The results, shown in the table below confirm that addition of ethanol was effective in creating the fruity flavour notes and masking bitter flavour. The fruit flavours achieved correlate well with the higher levels of ethyl butanoate noted.

**Table 3: Flavour Notes Due to Volatile Compounds From Cheese With and Without Added Ethanol**

| | **Control - no added ethanol** | **Ethanol addition to cheese** | **Ethanol produced *in situ*** |
|---|---|---|---|
| Tasted one month | not fruity | no data recorded | highly fruity |
| after manufacture | | | lipolytic |
| Tasted two months | bitter | slightly bitter | fruity |
| after manufacture | sickly | fruity | pineapple |
| | soapy | soapy | |

### Example 5: Flavour Concentrate from Fermentation of Cream

Ethanol was added to cream which was incubated with lipase from *Rhizomucor miehei* as described in Example 3.

The materials used were: full cream (40% fat), lipase from *Rhizomucor miehei,* and ethanol (10M solution). These ingredients were combined in screw-capped bottles. Each bottle contained 50 mL of cream, 40 mL of water and 10 mL of ethanol. One bottle was retained as a control. Lipase from *Rhizomucor miehei* (0.15 mL of enzyme solution) was added to a second bottle ― the test sample. The bottles containing these combinations were held in a water bath at 30°C. Samples (5 mL) were removed at intervals of 1, 3, 5 and 24 hours after enzyme addition to the test bottle, and stored in a freezer. The samples were later extracted using standard methods for analysis of ethyl ester content by Gas Liquid Chromatography (as described in example 1).

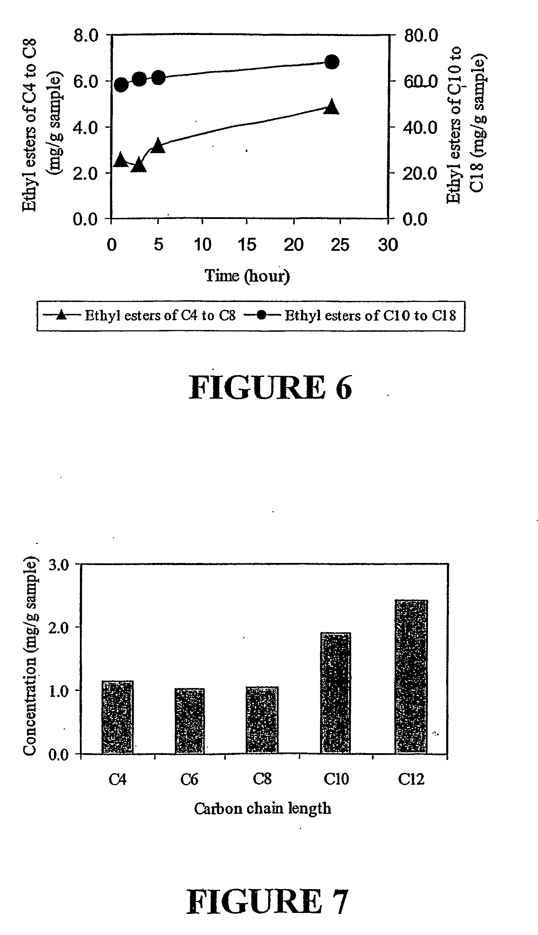

The analysis results are shown in Figures 6 and 7. Figure 6 shows that the ethyl esters of short chain fatty acids (C4 to C8) accumulate during the course of the reaction. Figure 7 shows the concentrations of the esters of short chain fatty acids (C4 to C8) and of medium chain length esters (C10 to C12) that have accumulated after five hours.

### Example 6: Addition of Fruit Flavour Notes to Enzyme Modified Cheese

Forty litres of water was held in a tank at 43°C. Disodium phosphate (1.2 kg dissolved in 5 L of hot water) and 30 kg of grated young Cheddar cheese curd were added. After twenty minutes of stirring, 120 g of protease dissolved in 5 L of water at 43°C was added. The mixture was stirred for a further five minutes after which time a further 20 kg of grated curd was added over a period of ten minutes. The temperature of the stirred reaction mixture was held at 43°C for four hours and the mixture was controlled at pH 5.6 by addition of 4M NaOH added in 100 mL aliquots. The enzyme was then inactivated by heating the mixture to 93°C and holding at that temperature for 15 minutes. After cooling, the mixture was held at 32°C and pH 5.4-5.6. The mixture was then inoculated with 4 L of a culture of *Enterococcus faecalis,* strain EF2 and 2 L of a culture of *Lb plantarum* to provide a balanced mature cheese flavour.
The mixture was held at 32°C and pH controlled in the range 5.4-5.6 for 45 hours. Samples were taken from the mixture (sample T4) for chemical analysis. Next, 440 mL of 100% ethanol and 75 mL of lipase from *Rhizomucor miehei* were added to the mixture. After 5 hours a further sample was taken (T5). The next day, after 20 hours reaction, sample 16 was taken. A fruity and cheesy odour was evident in the mixture. The mixture was then further processed to meet commercial requirements.

Results of the chemical analysis shown in table 4 confirm the formation of volatile esters in the reaction mixture following the addition of lipase and ethanol.

**Table 4: Concentration of Volatile Esters (Micrograms Per Gram of Sample)**

| | **Sample T4 (no added ethanol** | **Sample T5 (5 hours approx. reaction)** | **Sample T6 (20 hours reaction)** |
|---|---|---|---|
| Ethyl butanoate | 0.0 | 48.8 | 57.0 |
| Ethyl hexanoate | 0.0 | 99.3 | 129.5 |
| Ethyl octanoate | 0.0 | 169.0 | 232.5 |

### Example 7: Ester Synthesis From Sheep's Milk

A solution of 90 mL sheep's milk and 10 mL of 10 M ethanol was heated to 37°C. Palatase 20000 L (0.03 %) was added and the mixture incubated for 5 h. Samples (10 ml) were acidified with 1 mL of 2.5 M H₂SO4 and stored at -20°C before analysing for esters. Esters were determined by gas chromatography (GC) in a modification of the method described in Example 1. One mL of thawed, acidified sample was added to a 16 mL Kimax screw-capped test tube containing 5 mL of diethyl ether. Extraction was performed by shaking vigorously for about 2.5 min, followed by centrifugation at 1260 g for 5 min in a centrifuge (Heraeus Megafuge 1.0). One mL of the solvent layer was then transferred to a 16 mL Kimax tube containing 1 mL of internal standard (180 mg/L ethyl acetate in water). The total solvent extract containing internal standard was then run through a 500 mg aminopropyl solid phase extraction (SPE) cartridge to remove triglycerides. Ester compounds which pass straight through were then collected in a GC vial containing a small amount of oven-dried anhydrous sodium sulphate. This sample was analysed for esters by GC as described below.

Following sample extraction, esters were analysed by GC. The analysis was performed using a Shimadzu GC-15A gas chromatograph with a fused silica capillary column (liquid phase, DB-1; length, 30m; i.d., 0.25 mm; film thickness, 1.0 µm) (J&W Scientific, CA, USA). The oven was temperature-programmed at 45°C for 5 min, followed by increasing the temperature to 50°C at 5°C min⁻¹, then to 270°C at 20°C min⁻¹, and held at 270°C for 8 min. A split injection was performed at a ratio of 5:1 and 3 µL of sample were injected. The injector and FID (Flame Ionisation Detector) detector temperatures were 250°C and 275°C, respectively. Other conditions were: carrier gas (He) at 0.9 mL per min⁻¹; H₂ and air at 0.6 kg per cm², respectively; makeup gas (N₂ at 2 kg per cm². The FID output signal was recorded and processed using appropriate software (Shimadzu CLASS-VP^{™} Chromatography Data System Version 4.2 from Shimadzu, MD, USA). Esters in the samples were identified and quantified by comparison with injections of known amounts of pure standards.

The amounts of the ethyl esters formed in this reaction is set out below in table 5.

**Table 5: Ester Analysis - From Sheep's Milk (Units: mg/g sample)**

| **Ethyl Esters of** | **Amount** | **Ethyl Esters of** | **Amount** |
|---|---|---|---|
| C4 | 0.19 | C12 | 0.84 |
| C6 | 0.27 | C14 | 1.41 |
| C8 | 0.47 | C16 | 2.22 |
| | | C18 | 12.60 |
| C10 | 1.35 | C20 | 1.41 |

### Example 8: Ester Synthesis From Goat's Milk

A solution of 90 mL goat's milk and 10 mL of 10 M ethanol was heated to 37°C . Palatase 20000 L (0.03%) was added and the mixture incubated for 7 h.Samples (10 mL) were acidified with 1 mL of 0.5 M H₂SO4 and stored at -20°C before analysing for esters. Esters were determined by gas chromatography (GC) as described in Example 7.

The amounts of the ethyl esters formed in this reaction is set out below in table 6.

**Table 6: Ester Analysis ― From Goat's Milk (Units: mg/g sample)**

| **Ethyl Esters of** | **Amount** | **Ethyl Esters of** | **Amount** |
|---|---|---|---|
| | | C12 | 0.32 |
| C4 | 0.05 | | |
| | | C14 | 0.62 |
| C6 | 0.12 | | |
| | | C16 | 1.39 |
| C8 | 0.27 | | |
| | | C18 | 7.04 |
| C10 | 0.81 | | |
| | | C20 | 0.85 |

### Example 9: Ester Synthesis From Cream

25 kilograms of cream (40% fat)**[please specify % of milk fat]** were mixed with 0.075 kg Palatase 20000 L, 2.31 kg of ethanol (99.8% food grade from whey fermentation) and 22.63 kg of water in a stirred tank with circulating pump and heating. After the enzyme was added the mixture was stirred and pumped for 48 hours at 37°C. The pH at the end of three hours was 5.5. The pH at the end of 48 hours was 4.6. The reaction can be heat treated at this stage to make a stable flavour ingredient. However, in this example, 50 kg of grated cheddar cheese was added to the ester flavoured ingredient and this mixture was heated to 85 degrees for 15 minutes. The bulk of the esters/cream/cheese was put in 20 L plastic pails. The blending of the ester and the cream with the cheese stopped phase separation. The heat step inactivated the Palatase and made the product aseptic.

A second batch flavour ingredient was prepared from cream as outlined above, but it was made from an initial mixture of 70 kg of cream, with Palatase 20000 L, ethanol (99.8% food grade from whey fermentation) and water added in the same ratio as described above for the first batch prepared. Sixty kg of the resulting product was mixed with 60 kg of cheddar cheese.and heat treated to 85 degrees for 15 minutes to inactivate the Palatase and make the product aseptic.

The ester analysis of the resulting product from the second batch is set out below in table 7.

**Table 7: Ester Analysis Ester/Cream/Cheddar Cheese (Units: mg/g sample)**

| **Ethyl Esters of** | **Amount** | **Free Fatty Acids** Of | **Amount** |
|---|---|---|---|
| C4-C8 | 1.2 | C4-C8 | 2.1 |
| C10-C18 | 12.6 | C10-C18 | 8.9 |

### Example 10: Flavour Evaluation

### a) White Sauce

A sample of ester flavoured ingredient prepared in accordance with the second batch in example 9 was mixed at 1% in a white sauce formulation. The white sauce was made from mixing and heating 125 g of sauce powder (5 g salt, 120 g standard white flour and 500 g cream powder), and blending with 450 g of water.

The resulting taste was determined by the expert sensory panel (see example 4) to be fruity, sweet (pineapple lump) flavour with soapy notes.

### b) Cheddar Cheese

A cheddar formulation was prepared as follows. 0.5% of an ester flavoured ingredient prepared according to the second batch in example 9 was mixed with 58.8% cheddar cheese, 1.75% trisodium citrate and 39.4% water, the percentages being on a weight/weight basis.

The resulting product had a balanced, fruity flavour which came through late.

### c) Parmesan - Style Cheese

A parmesan style cheese mixture was prepared as followed. 0.5% of an ester flavoured ingredient prepared according to the second batch in example 9 was mixed with 56.2% parmesan cheese, 1.75% try sodium citrate and 42% water.

This was described by the expert panel to have a pleasant sweet, fruity flavour which provided a good balance to the savoury flavour notes of parmesan style cheese.

### d) Gouda Cheese

A gouda cheese formulation was made by mixing 0.5% of ester flavoured ingredients prepared as described for the second batch in example 9 with 63.7% gouda cheese, 1.75% trisodium citrate and 34.5% water.

This was described by the expert panel as having a fruity flavour with no chemical after taste.

### e) Fondue Cheese

A fondue recipe was prepared using 14% cheddar cheese, 23% cream, 47% milk, 9% butter, 4% flour, 1% other flavours and 2% of the ester flavoured ingredient prepared in accordance with the method described in example 6.

The expert panel stated that the resulting fondue formulation had improved savoury/fruity and cheesy taste.

### REFERENCES

Barbieri G, Boizoni L, Careri M, Mangia A, Parolari G, Spagnoli S and Virgili R (1994) Study of the volatile fraction of Parmesan cheese. *Journal of Agricultural and Food Chemistry,* **42,** 1170-1176.
Bills DD, Morgan ME, Libbey LM and Day EA 1965) Identification of compounds responsible for fruity flavor defect of experimental Cheddar cheeses. *Journal of Dairy Science,* **48**, 1168-1 173.
Christie WW(1995) Composition and structure of milk lipids, in *Advanced Dairy Chemistry* - 2: Lipids, 2^{nd}, edn, (editor PF Fox), Chapman and Hall, London, pp 1 - 28.
Dumont JP, Roger S and Adda J (1974) Composés volatils due fromage entier et du fromage râpé: exemple du Parmesan. *Le lait,* **54,** 386-394.
Engels WJM, Dekker R, de Jong C and Visser S (1997) A comparative study of volatile compounds in the water-soluble fraction of vanous types of ripened cheese. *International Dairy Journal,* **7,** 255-263.
Friedrich JE and Acree TE (1998) Gas chromatography olfactometry (GCIO) of dairy products. *International Dairy Journal,* **8,** 235-241.
Fox PF, Guinee TP, Cogan TM and McSweeney PLH (2000) *Fundamentals of Cheese Science.* Chapter 12, Cheese Flavor, pp 282 - 384. Aspen Publishers Inc, Gaithersburg, Maryland, USA.
Holland R and Coolbear T (1996) Purification of lipase from *Lactococcus lactis* subsp. *cremoris* E8. *Journal of Dairy Research,* **63,** 131 - 140.
Horwood JF, Stark W and Hull RR (1987) A "fermented, yeasty" flavour defect in Cheddar Cheese. *Australian Journal of Dairy Technology,* **42**, 25-26.
Hosono A and Elliot JA (1974) Properties of crude ethylester-forming enzyme preparations from some lactic acid and psychrotrophic bacteria. *Journal of Dairy Science*, **57**, 1432-1437.
Hosono A, Elliot JA and McGugan WA (1974) Production of ethylesters by some lactic acid and psychrotrophic bacteria. *Journal of Dairy Science,* **57,** 535-539.
Jensen RG and Clarke RW (1988) Lipid composition and properties, in *Fundamentals of Dairy Chemistry,* 3 edn, (eds NP Wong R Jenness, M Keeny and EH Marth), van Nostrand Reinhold, New York, pp. 171―213.
Liu S-Q, Holland R and Crow VL (1998) Ethyl butanoate formation by dairy lactic acid bacteria. *International Dairy Journal,* **8**, 651-657.
McGugan WA, Blais, JA, Boulet M, Giroux RN, Elliott JA and Emmons DB (1975) Ethanol, ethyl esters, and volatile fatty acids in fruity Cheddar cheese. *Canadian Institute of Food Science and Technology Journal,* **8,** 196-198.
Meinhart E and Schreier P (1986) Study of flavour compounds from Parmigiano Reggiano cheese. *Milchwissenschaft,* **41,** 189-691.
Morgan ME (1976) The chemistry of some microbially induced flavor defects in milk and dairy foods. *Biotechnology and Bioengineering,* **18,** 953-965.
Urbach G (1995) Contribution of lactic acid bacteria to flavour compound formation in dairy products. *International Dairy Journal,* **5,** 877-903.
Urbach G (1997) The flavour of milk and dairy products: II. Cheese: contribution of volatile compounds. *International Journal of Dairy Technology,* **50,** 79-89.

## Claims

1. A process for producing flavour enhancing esters which comprises:
conducting a transesterification reaction between a mono-, di-, or triglyceride from a dairy source and an alcohol in an aqueous medium in the presence of an esterase exhibiting a transesterification activity to esterification activity ratio with said mono-di-, or triglyceride of at least 25:1 to form said flavour enhancing esters.

2. A process for producing flavour enhancing esters which comprises:
conducting a transesterification reaction between a mono-, or diglyceride from a dairy source and an alcohol in an aqueous medium in the presence of an enzyme derived from a lactic acid bacteria exhibiting a transesterification activity to esterification activity ratio with said mono- or diglyceride of at least 25:1 to form said flavour enhancing esters.

3. A process for producing flavour enhancing esters which comprises:
conducting a transesterification reaction between a mono-, di-, or triglyceride from a dairy source and an alcohol in an aqueous medium in the presence of a mixture of a lipase and an enzyme derived from a lactic acid bacteria or a mixture of an esterase and one or more enzymes derived from a lactic acid bacteria, said mixture exhibiting a transesterification activity to esterification activity ratio with said mono-, di-, or triglyceride of at least 25:1 to form said flavour enhancing esters.

4. A process according to either of claims 1 or 3 wherein said esterase is a lipase.

5. A process according to claim 2 or 3 wherein said enzyme is added to said glyceride and alcohol in said aqueous medium.

6. A process according to claim 2 or 3 wherein the lactic acid bacteria from which said enzyme is derived is added to said glyceride and alcohol in said aqueous medium to produce said enzyme therein.

7. A process according to anyone of the preceding claims wherein said glyceride from a dairy source is from whole milk, cream, milk fat, cheese, enzyme modified cheese (EMC), buttermilk, whey, whey cream, fermented milk or other milk product.

8. A process according to anyone of the preceding claims wherein said alcohol is ethanol.

9. A process according to anyone of claims 1 to 7 wherein said alcohol is 2-phenyl ethanol.

10. A process according to anyone of the preceding claims which includes a fermentation step to produce said alcohol.

11. A process according to any one of the preceding claims wherein alcohol-producing microorganisms are present to mediate the fermentation step.

12. A process according to claim 11 wherein said alcohol-producing microorganism is *Lactobacillus fermentum.*

13. A process according to any one of claims 1 to 8 and 10 to 12 wherein said mono-, di- or triglycerides each have acyl groups with up to 10 carbon atoms and said alcohol is ethanol.

14. A process according to any one of claims 1 to 7 and 9 to 12 wherein said glyceride is a diglyceride having acyl groups with up to 6 carbon atoms and said alcohol is 2-phenylethanol.

15. A process according to any one of claims 1 to 7 and 9 to 12 wherein said glyceride is a monoglyceride having acyl groups with up to 8 carbon atoms and said alcohol is 2-phenylethanol.

16. A process according to any one of claims 3 to 15 wherein said lipase is a 1,3-specific lipase from *Rhizomucor miehei.*

17. A process according to any one of claims 2 to 15 wherein said enzyme is derived from bacterial cultures of one or more strains of the following genera including:
*Streptococcus,*
*Lactococcus,*
*Lactobacillus,*
*Leuconostoc,*
*Pediococcus,*
*Enterococcus,*
*Propionibacterium,* and
*Pseudomonas*

18. A process according to claim 17 wherein said enzyme is derived from the strain *Streptoccus thermophilus* ST1.

19. A process according to claim 17 wherein said enzyme is derived from any one of the strains *Streptococcus thermophilus* NCIMB 700821; *Lactobacillus fermentum* B4017; *Lactococcus lactis* subsp. *cremoris* E8 and *Lactococcus lactis* subsp. *lactis* ML3.

20. A process according to anyone of the preceding claims wherein said flavour enhancing ester so prepared is added as an ingredient to a food product

21. A process according to claim 20 wherein said food product is a dairy product.

22. A process according to claim 21 wherein said dairy product is a cheese or a cheese based product.

## Patentansprüche

1. Verfahren zum Herstellen von geschmacksverbessernden Estern, welches umfaßt:
Durchführen einer Umesterungsreaktion zwischen einem Mono-, Di- oder Triglycerid aus einer Milchproduktquelle und einem Alkohol in einem wäßrigen Medium in der Gegenwart einer Esterase, die ein Verhältnis von Umesterungsaktivität zu Veresterungsaktivität mit dem Mono-, Di- oder Triglycerid von wenigstens 25:1 zeigt, um die geschmacksverbessernden Ester zu bilden.

2. Verfahren zum Herstellen von geschmacksverbessernden Estern, welches umfaßt:
Durchführen einer Umesterungsreaktion zwischen einem Mono- oder Diglycerid aus einer Milchproduktquelle und einem Alkohol in einem wäßrigen Medium in der Gegenwart eines Enzyms, das von Milchsäurebakterium abgeleitet wird, das ein Verhältnis von Umesterungsaktivität zu Veresterungsaktivität mit dem Mono- oder Diglycerid von wenigstens 25:1 zeigt, um die geschmacksverbessernden Ester zu bilden.

3. Verfahren zum Herstellen von geschmacksverbessernden Estern, welches umfaßt:
Durchführen einer Umesterungsreaktion zwischen einem Mono-, Di- oder Triglycerid aus einer Milchproduktquelle und einem Alkohol in einem wäßrigen Medium in der Gegenwart einer Mischung einer Lipase und eines Enzyms, das aus einem Milchsäurebakterien abgeleitet wird, oder einer Mischung einer Esterase und eines oder mehrerer Enzyme, die aus Milchsäurebakterien abgeleitet werden, wobei die Mischung ein Verhältnis einer Umesterungsaktivität zu Veresterungsaktivität mit dem Mono-, Di- oder Triglycerid von wenigstens 25:1 zeigt, um die geschmacksverbessernden Ester zu bilden.

4. Verfahren nach einem der Ansprüche 1 oder 3, wobei die Esterase eine Lipase ist.

5. Verfahren nach Anspruch 2 oder 3, wobei das Enzym zu dem Glycerid und dem Alkohol in dem wäßrigen Medium zugegeben wird.

6. Verfahren nach Anspruch 2 oder 3, wobei die Milchsäurebakterien, von denen das Enzym abgeleitet wird, zu dem Glycerid und dem Alkohol in dem wäßrigen Medium zugegeben wird, um das Enzym darin zu erzeugen.

7. Verfahren nach einem der vorangehenden Ansprüche, wobei das Glycerid aus einer Milchproduktquelle aus Vollmilch, Sahne, Milchfett, Käse, durch Enzym modifiziertem Käse (EMC), Buttermilch, Molke, Molkesahne, fermentierter Milch oder anderem Milchprodukt ist.

8. Verfahren nach einem der vorangehenden Ansprüche, wobei der Alkohol Ethanol ist.

9. Verfahren nach einem der Ansprüche 1 bis 7, wobei der Alkohol 2-Phenylethanol ist.

10. Verfahren nach einem der vorangehenden Ansprüche, welches einen Fermentationsschritt einschließt, um den Alkohol zu erzeugen.

11. Verfahren nach einem der vorangehenden Ansprüche, wobei Alkohol-erzeugende Mikroorganismen vorhanden sind, um den Fermentationsschritt zu vermitteln.

12. Verfahren nach Anspruch 11, wobei der Alkohol-erzeugende Mikroorganismus *Lactobacillus fermentum* ist.

13. Verfahren nach einem der Ansprüche 1 bis 8 und 10 bis 12, wobei die Mono-, Di-oder Triglyceride jeweils Acylgruppen mit bis zu 10 Kohlenstoffatomen aufweisen und der Alkohol Ethanol ist.

14. Verfahren nach einem der Ansprüche 1 bis 7 und 9 bis 12, wobei das Glycerid ein Diglycerid mit Acylgruppen mit bis zu 6 Kohlenstoffatomen ist und der Alkohol 2-Phenylethanol ist.

15. Verfahren nach einem der Ansprüche 1 bis 7 und 9 bis 12, wobei das Glycerid ein Monoglycerid mit Acylgruppen mit bis zu 8 Kohlenstoffatomen ist und der Alkohol 2-Phenylethanol ist.

16. Verfahren nach einem der Ansprüche 3 bis 15, wobei die Lipase eine 1,3-spezifische Lipase aus *Rhizomucor miehei* ist.

17. Verfahren nach einem der Ansprüche 2 bis 15, wobei das Enzym aus Bakterienkulturen von einem oder mehreren Stämmen der folgenden Gattungen abgeleitet wird, die einschließen:
*Streptococcus,*
*Lactococcus,*
*Lactobacillus;*
*Leuconostoc,*
*Pediococcus,*
*Enterococcus,*
*Propionibacterium,* und
*Pseudomonas.*

18. Verfahren nach Anspruch 17, wobei das Enzym aus dem Stamm *Streptococcus thermophilus* ST1 abgeleitet wird.

19. Verfahren nach Anspruch 17, wobei das Enzym aus einem der Stämme *Streptococcus thermophilus* NCIMB 700821; *Lactobacillus fermentum* B4017; *Lactococcus lactis* subsp. *cremoris* E8 und *Lactococcus lactis* subsp. l*actis* ML3 abgeleitet wird.

20. Verfahren nach einem der vorangehenden Ansprüche, wobei der so hergestellte geschmacksverbessernde Ester als ein Bestandteil zu einem Lebensmittel zugegeben wird.

21. Verfahren nach Anspruch 20, wobei das Lebensmittel ein Milchprodukt ist.

22. Verfahren nach Anspruch 21, wobei das Milchprodukt ein Käse oder ein Produkt auf Käsebasis ist.

## Revendications

1. Procédé pour la production d'esters renforçateurs d'arôme, qui comprend :
la conduite d'une réaction de transestérification entre un mono-, di- ou triglycéride provenant d'une source laitière et un alcool dans un milieu aqueux en présence d'une estérase présentant un rapport de l'activité de transestérification à l'activité d'estérification avec ledit mono-, di- ou triglycéride d'au moins 25:1 pour former lesdits esters renforçateurs d'arôme.

2. Procédé pour la production d'esters renforçateurs d'arôme, qui comprend :
la conduite d'une réaction de transestérification entre un mono- ou diglycéride provenant d'une source laitière et un alcool dans un milieu aqueux en présence d'une enzyme dérivée d'une bactérie lactique présentant un rapport de l'activité de transestérification à l'activité d'estérification avec ledit mono- ou diglycéride d'au moins 25:1 pour former lesdits esters renforçateurs d'arôme.

3. Procédé pour la production d'esters renforçateurs d'arôme, qui comprend :
la conduite d'une réaction de transestérification entre un mono-, di- ou triglycéride provenant d'une source laitière et un alcool dans un milieu aqueux en présence d'un mélange d'une lipase et d'une enzyme dérivée d'une bactérie lactique ou d'un mélange d'une estérase et d'une ou plusieurs enzymes dérivées d'une bactérie lactique, ledit mélange présentant un rapport de l'activité de transestérification à l'activité d'estérification avec ledit mono-, di- ou triglycéride d'au moins 25:1 pour former lesdits esters renforçateurs d'arôme.

4. Procédé suivant la revendication 1 ou 3, dans lequel ladite estérase est une lipase.

5. Procédé suivant la revendication 2 ou 3, dans lequel ladite enzyme est ajoutée audit glycéride et audit alcool dans ledit milieu aqueux.

6. Procédé suivant la revendication 2 ou 3, dans lequel la bactérie lactique de laquelle ladite enzyme est dérivée est ajoutée audit glycéride et audit alcool dans ledit milieu aqueux pour produire ladite enzyme dans ce milieu.

7. Procédé suivant l'une quelconque des revendications précédentes, dans lequel ledit glycéride provenant d'une source laitière est choisi entre le lait entier, la crème, la matière grasse laitière, le fromage, un fromage modifié avec une enzyme (EMC), le babeurre, le petit-lait, la crème de petit-lait, le lait fermenté, et un autre produit laitier.

8. Procédé suivant l'une quelconque des revendications précédentes, dans lequel ledit alcool est l'éthanol.

9. Procédé suivant l'une quelconque des revendications 1 à 7, dans lequel ledit alcool est le 2-phényléthanol.

10. Procédé suivant l'une quelconque des revendications précédentes, qui comprend une étape de fermentation pour produire ledit alcool.

11. Procédé suivant l'une quelconque des revendications précédentes, dans lequel des microorganismes producteurs d'alcool sont présents pour assurer la médiation de l'étape de fermentation.

12. Procédé suivant la revendication 11, dans lequel ledit microorganisme producteur d'alcool est *Lactobacillus fermentum*.

13. Procédé suivant l'une quelconque des revendications 1 à 8 et 10 à 12, dans lequel lesdits mono-, di- ou triglycérides ont chacun des groupes acyle ayant jusqu'à 10 atomes de carbone et ledit alcool est l'éthanol.

14. Procédé suivant l'une quelconque des revendications 1 à 7 et 9 à 12, dans lequel ledit glycéride est un diglycéride ayant des groupes acyle ayant jusqu'à 6 atomes de carbone et ledit alcool est le 2-phényléthanol.

15. Procédé suivant l'une quelconque des revendications 1 à 7 et 9 à 12, dans lequel ledit glycéride est un monoglycéride ayant des groupes acyle avec jusqu'à 8 atomes de carbone et ledit alcool est le 2-phényléthanol.

16. Procédé suivant l'une quelconque des revendications 3 à 15, dans lequel ladite lipase est une lipase 1,3-spécifique provenant de *Rhizomucor miehei.*

17. Procédé suivant l'une quelconque des revendications 2 à 15, dans lequel ladite enzyme est dérivée de cultures bactériennes d'une ou plusieurs souches des genres suivants, comprenant :
*Streptococcus*,
*Lactococcus,*
*Lactobacillus,*
*Leuconostoc*,
*Pediococcus,*
*Enterococcus*,
*Propionibacterium,* et
*Pseudomonas.*

18. Procédé suivant la revendication 17, dans lequel ladite enzyme est dérivée de la souche Streptoccus *thermophilus* ST1.

19. Procédé suivant la revendication 17, dans laquelle ladite enzyme est dérivée de l'une quelconque des souches *Streptococcus thermophilus* NCIMB 700821 ; *Lactobacillus fermentum* B4017 ; *Lactococcus lactis* subsp. *cremoris* E8 et *Lactococcus lactis* subsp. *lactis* MLS.

20. Procédé suivant l'une quelconque des revendications précédentes, dans lequel ledit ester renforçateur d'arôme ainsi préparé est ajouté comme ingrédient à un produit alimentaire.

21. Procédé suivant la revendication 20, dans lequel ledit produit alimentaire est un produit laitier.

22. Procédé suivant la revendication 21, dans lequel ledit produit laitier est un fromage ou un produit à base de fromage.
